# EUROPEAN PATENT SPECIFICATION

(11) **EP 0 893 298 B1**
(45) Date of publication and mention of the grant of the patent: **04.10.2001**
(21) Application number: 98112162.7
(22) Date of filing: 01.07.1998
(51) Int. Cl.: B60K 41/16, F16H 61/42

(54) **Hydrostatic transmission for motor vehicles**
Hydrostatischer Antrieb für Kraftfahrzeuge
Transmission hydrostatique de puissance pour véhicule automobile

(30) Priority: 24.07.1997 IT PD970164
(43) Date of publication of application: 27.01.1999
(73) Proprietor: ANTONIO CARRARO S.p.A., 35011 Campodarsego (Padova) (IT)
(72) Inventor: Martignon, Girolamo, 35010 Borgoricco (Padova) (IT)
(74) Representative: Modiano, Guido, Dr.-Ing.

(56) References cited:
- EP-A- 0 408 170
- DE-A- 2 652 976
- DE-A- 3 120 278
- DE-B- 1 216 124
- GB-A- 1 186 405
- GB-A- 2 128 718
- US-A- 3 595 343
- US-A- 3 805 676

## Description

The present invention relates to a transmission, particularly for motor vehicles such as tractors or the like.

It is known that hydrostatic transmissions, owing to their functional features, are currently used successfully, particularly in the field of the manufacture of motor vehicles such as tractors or the like.

Commercially available transmissions are currently of the closed type and comprise a hydrostatic unit, associated with an internal-combustion engine, which is constituted by a first variable-delivery pump connected, in a closed circuit, to a hydraulic motor which is adapted to provide the propulsion of the motor vehicle.

The hydrostatic units also comprise a second boost pump to compensate for the volumetric losses of the circuit, and overpressure control means, actuation means and cooling means.

In conventional transmissions it is currently possible to provide an operating condition which is commonly known in the field as "automotive" and in which the ratio between the rpm rate of the motor and the rate of flow of the hydraulic transmission remains constant.

In particular, this occurs by adjusting the displacement of the first variable-displacement pump.

In particular, in conventional transmissions the displacement of the first pump is controlled directly by the accelerator control of the internal-combustion engine, while selection of the advancement direction of the second pump and therefore of the motor is provided by means of an electric valve.

However, the configuration of conventional transmissions as regards the controls that operate them forces the operator to perform continuous adjustment and complex management of said controls.

GB-A-2 128 718 discloses a drive unit consisting of an internal combustion engine and a steplessly adjustable hydrostatic transmission which comprises a combination of elements as defined in the precharacterizing portion of the appended claim 1.

The aim of the present invention is to provide a transmission which solves the drawbacks noted above in conventional transmissions, particularly, without altering the functional characteristics for which hydrostatic transmissions are appreciated, by greatly simplifying the management of the various functional and operating modes in any condition of application.

Within this aim, an object of the present invention is to provide a transmission which is particularly reliable and sturdy and is adapted to be applied to various types of vehicle, optionally to vehicles that have already been prepared or manufactured.

Another object of the present invention is to provide a transmission which has competitive costs with respect to conventional transmissions.

Another object of the present invention is to provide a transmission which can be manufactured with conventional technologies and facilities.

In accordance with the invention, there is provided a transmission, particularly for motor vehicles such as tractors or the like, as defined in the appended claims.

The particular technical characteristics and advantages of the present invention will become apparent from the description of an embodiment thereof, illustrated only by way of non-limitative example in the accompanying drawings, wherein:
Figure 1 is a schematic view of a transmission according to the invention;
Figure 2 is a circuit diagram of the transmission of Figure 1.

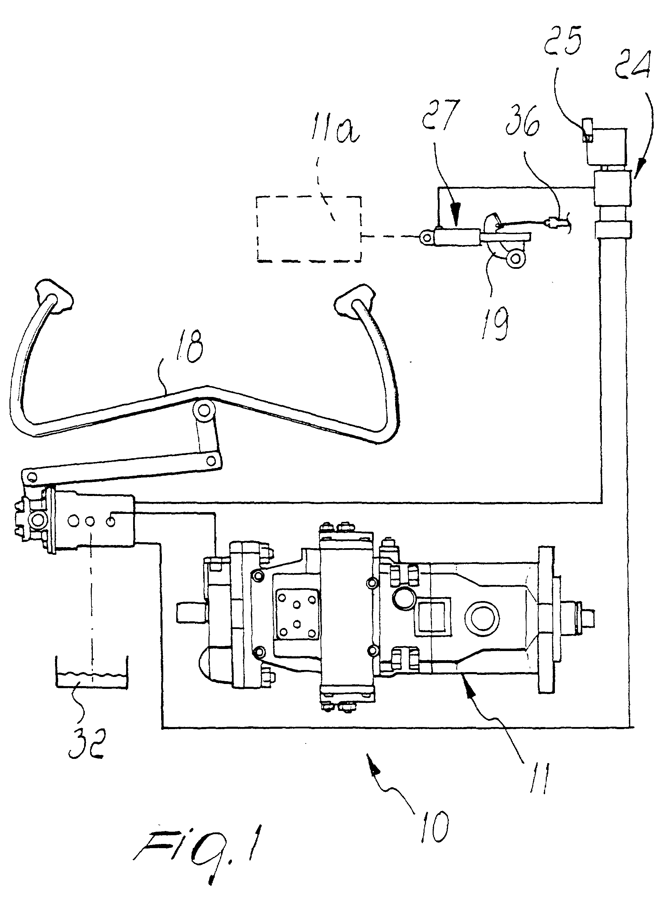

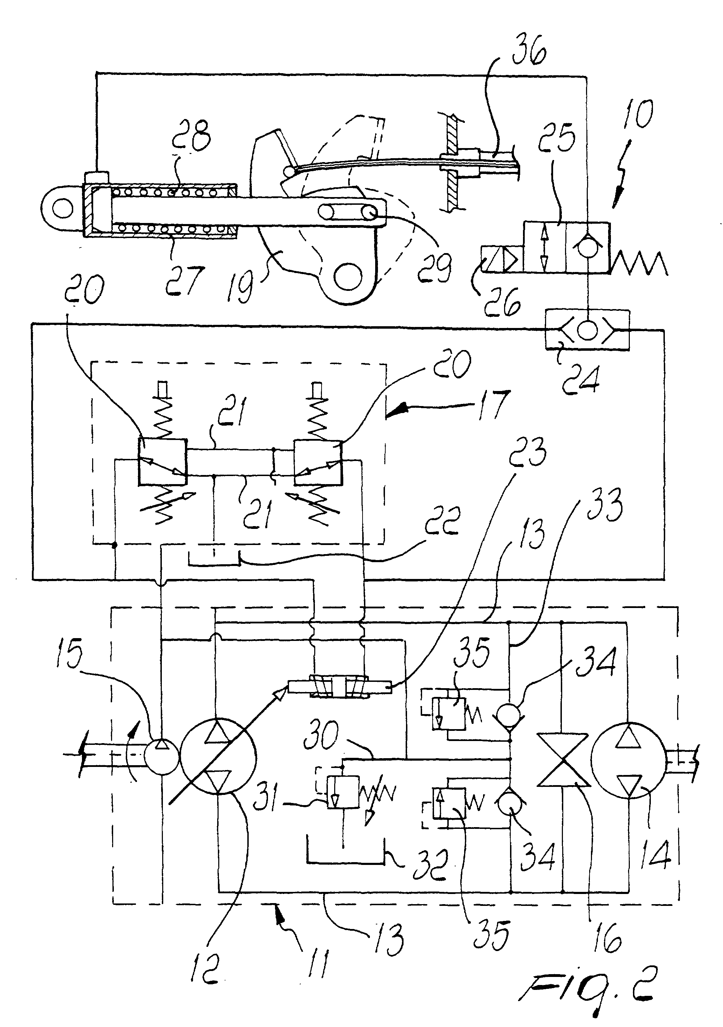

With reference to Figures 1 and 2, a hydrostatic transmission, particularly for motor vehicles such as tractors or the like, according to the invention, is generally designated by the reference numeral 10.

The transmission 10 comprises a hydrostatic unit, generally designated by the reference numeral 11, which is associated with a conventional internal-combustion engine which is shown schematically in Figure 1 and is designated by the reference numeral 11a.

The hydrostatic unit 11 is constituted by a first variable-delivery pump 12 with two directions of rotation which is connected, by means of a closed circuit 13, to a hydraulic motor 14 of the type with two directions of rotation and which is adapted to provide propulsion for the motor vehicle, not shown.

The hydrostatic unit 11 also comprises: a second boost pump 15 for compensating for the volumetric losses of the circuit; means for controlling overpressures, described hereinafter; actuation means, also described hereinafter; and conventional cooling means, generally designated by the reference numeral 16, which are parallel-connected to the motor 14, drawing the cooling flow alternatively from the branch that is at lower pressure.

The second pump 15 is connected, through the interposition of a distributor unit 17 actuated by a control pedal 18, to first actuation means, described in greater detail hereinafter, which are adapted to vary the displacement of the first pump 12, and to second actuation means, also described in greater detail hereinafter, which are adapted to drive a pedal crank 19 of the accelerator of said internal-combustion engine.

In particular, the distributor unit 17 comprises two diverting distributors 20 associated with an equal number of ducts 21 which are connected to the first actuation means and are connected to a reservoir 22 at their discharge.

The two diverting distributors can be activated alternatively under the control of the control pedal 18.

The first actuation means, in this case, are constituted by two cylinders with a single-acting piston and with a return spring, generally designated by the reference numeral 23.

The second actuation means are connected to the delivery of the first actuation means through the interposition of a first bistable valve 24 and of a second cartridge valve 25 which is also of the two-way normally-closed type.

The second valve 25 is actuated so as to be opened and closed by a solenoid 26, while the second actuation means, in this case, are constituted by a single-acting hydraulic actuator 27 in which return is actuated by a spring 28.

In particular, the stem of the actuator 27 is associated with the pedal crank 19 by means of a pivot 29.

The overpressure control means comprise, in this case, a branch 30 with an overpressure limiting valve 31 which is connected, at its discharge, to a reservoir 32 and to the second pump 15 at its delivery.

The overpressure control means also comprise, in this case, another branch 33 which has two check valves 34, each of which is parallel-coupled to a corresponding pressure limiting valve 35; said check valves are connected to the reservoir 32 at their discharge and, at their delivery, to a corresponding branch for mutually connecting the first pump 12 and the motor 14.

Figure 2 furthermore illustrates a hand throttle 36 for manually operating the pedal crank 19, which however operates independently of the transmission 10.

In practice it has been found that the present invention has achieved the intended aim and objects.

In particular, it should be noted that by means of the control pedal the operator is capable of controlling both the acceleration of the internal-combustion engine 11a and the variation in the displacement of the second variable-delivery pump 15.

Furthermore, again by means of the control pedal 18, it is possible to reverse the rotation direction, further simplifying the operation of the machine.

It should also be noted that all this has been achieved without altering the functional characteristics of the transmission according to the invention, which besides, by virtue of its constructive characteristics, can be manufactured at competitive costs with respect to conventional transmissions.

The present invention is susceptible of numerous modifications and variations, all of which are within the scope of the inventive concept.

The materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A transmission (10), particularly for motor vehicles such as tractors or the like, comprising:
- a hydrostatic unit (11) associated with an internal-combustion engine (11a), said hydrostatic unit (11) being constituted by a first variable-delivery pump (12) which is connected, in a closed circuit (13), to a hydraulic motor (14) so as to provide vehicle propulsion;
- a second boost pump (15) to compensate for the volumetric losses of the circuit (13);
- control means (30-35) and first and second actuation means (23;27-28);
- said second pump (15) being connected, by virtue of the interposition of a distributor unit (17) actuated by a control pedal (18), to said first actuation means (23) which are adapted to vary the displacement of said first pump (12) and to said second actuation means (27-28) which are adapted to actuate the accelerator of said internal-combustion engine (11a),
- said second actuation means comprise a single-acting hydraulic actuator (27) in which return is actuated by a helical spring(28), the stem of said actuator being kinematically connected to the accelerator of said internal-combustion engine (11a),
- said second actuation means (27-28) are connected to the delivery of said first actuation means (23) by virtue of the interposition of valves (24,25),
**characterised in that**
- said stem of said actuator is kinematically connected to a pedal crank (19) of the accelerator of said internal-combustion engine (11a), and
- said single-acting hydraulic actuator (27) of said second actuation means (27-28) is connected to the delivery of said first actuation means (23) by virtue of the interposition of a first bistable valve (24) and of a second two-way normally-closed cartridge valve (25), said second valve (25) is opened by a solenoid (26).

2. A transmission according to claim 1, **characterized in that** said distributor unit (17) is constituted by two diverting distributors (20) which are associated with an equal number of ducts (21) connected to said first actuation means (23) and, at the discharge, to a reservoir (22), said two diverting distributors (20) being activatable alternatively under the control of said control pedal (18).

3. A transmission according to claim 1, **characterized in that** said first actuation means comprise two cylinders with a single-acting piston with return spring (23).

4. A transmission according to claim 1, **characterized in that** said control means comprise overpressure control means constituted by at least one branch (30) with a pressure limiting valve (31), which is connected to a corresponding reservoir (32) at its discharge and to said second pump (15) at its delivery.

5. A transmission according to claim 4, **characterized in that** said overpressure control means comprise at least one branch (33) with two check valves (34), each of which is coupled to a corresponding pressure limiting valve (35), each check valve (34), together with the corresponding pressure limiting valve (35), being connected to a corresponding reservoir at its discharge and, at its delivery, to a branch for connecting said first pump (12) to said hydraulic motor (14).

## Patentansprüche

1. Kraftübertragungseinrichtung (10), insbesondere für Kraftfahrzeuge wie Traktoren oder dergleichen, mit
- einer einem Verbrennungsmotor (11a) zugeordneten hydrostatischen Einheit (11), wobei die hydrostatische Einheit (11) aus einer ersten Verstellpumpe (12) besteht, die in einem geschlossenen Kreislauf (13) zum Zwecke des Fahrzeugantriebs mit einem Hydraulikmotor (14) verbunden ist;
- einer zweiten Zusatzpumpe (15) zum Kompensieren der volumetrischen Verluste des Kreislaufs (13);
- Steuermitteln (30-35) sowie ersten und zweiten Betätigungsmitteln (23; 27-28);
- wobei die zweite Pumpe (15) durch Zwischenschalten einer durch ein Steuerpedal (18) betätigten Verteilereinheit (17) mit den ersten Betätigungsmitteln (23), die zum Ändern des Saugvermögens der ersten Pumpe (12) geeignet sind, und mit den zweiten Betätigungsmittel (27-28), die zum Betätigen des Gaspedals des Verbrennungsmotors (11 a) geeignet sind, verbunden ist,
- wobei die zweiten Betätigungsmittel einen einfachwirkenden Hydraulikbetätiger (27) enthalten, bei dem die Rückstellung durch eine Schraubenfeder (28) erfolgt und dessen Stange kinematisch mit dem Gaspedal des Verbrennungsmotors (11a) verbunden ist,
- wobei die zweiten Betätigungsmittel (27-28) durch Zwischenschalten von Ventilen (24, 25) mit der Druckseite der ersten Betätigungsmittel (23) verbunden sind,
**dadurch gekennzeichnet, daß**
- die Stange des Betätigers kinematisch mit einer Pedalkurbel (19) des Gaspedals des Verbrennungsmotors (11a) verbunden ist, und
- der einfachwirkende Hydraulikbetätiger (27) der zweiten Betätigungsmittel (27, 28) durch Zwischenschalten eines ersten bistabilen Ventils (24) und eines energielos geschlossenen Zweiwege-Kolbenventils (25) mit der Druckseite der ersten Betätigungsmittel (23) verbunden ist, wobei das zweite Ventil (25) durch ein Solenoid (26) geöffnet wird.

2. Kraftübertragungseinrichtung nach Anspruch 1, **dadurch gekennzeichnet, daß** die Verteilereinheit (17) aus zwei abzweigenden Verteilern (20) besteht, die einer gleichen Anzahl von Kanälen (21) zugeordnet sind, welche mit den ersten Betätigungsmitteln (23) und auf der Auslaßseite mit einem Reservoir (22) verbunden sind, wobei die zwei abzweigenden Verteiler (20) gesteuert durch das Steuerpedal (18) wechselnd betätigbar sind.

3. Kraftübertragungseinrichtung nach Anspruch 1, **dadurch gekennzeichnet, daß** die ersten Betätigungsmittel zwei Zylinder mit einem einfachwirkenden Kolben mit Rückstellfeder (23) enthalten.

4. Kraftübertragungseinrichtung nach Anspruch 1, **dadurch gekennzeichnet, daß** die Steuermittel Überdrucksteuermittel enthalten, die aus zumindest einer Leitung (30) mit einem Druckbegrenzungsventil (31) bestehen, das auf seiner Auslaßseite mit einem entsprechenden Reservoir (32) und auf seiner Druckseite mit der zweiten Pumpe (15) verbunden ist.

5. Kraftübertragungseinrichtung nach Anspruch 4, **dadurch gekennzeichnet, daß** die Überdrucksteuermittel zumindest einen Zweig (33) mit zwei Rückschlagventilen (34) enthalten, die jeweils mit einem entsprechenden Druckbegrenzungsventil (35) gekoppelt sind, wobei die Absperrventile (34) zusammen mit den entsprechenden Druckbegrenzungsventilen (35) auf der Auslaßseite jeweils mit einem entsprechenden Reservoir und auf der Druckseite jeweils mit einer Leitung zum Verbinden der ersten Pumpe (12) mit dem Hydraulikmotor (14) verbunden sind.

## Revendications

1. Transmission (10), particulièrement pour des véhicules à moteur tels que des tracteurs ou analogues, comprenant :
- une unité hydrostatique (11) associée à un moteur à combustion interne (11a), ladite unité hydrostatique (11) étant constituée par une première pompe à débit variable (12) qui est reliée, dans un circuit fermé (13), à un moteur hydraulique (14) pour fournir la propulsion du véhicule ;
- une seconde pompe de suralimentation (15) pour compenser les pertes volumétriques du circuit (13) ;
- des moyens de commande (30 - 35) et des premiers et des seconds moyens d'actionnement (23 ; 27 - 28) ;
- ladite seconde pompe (15) étant reliée, par l'interposition d'une unité de distribution (17) actionnée par une pédale de commande (18), auxdits premiers moyens d'actionnement (23) qui sont adaptés pour modifier la cylindrée de ladite première pompe (12) et auxdits seconds moyens d'actionnement (27 - 28) qui sont adaptés pour actionner l'accélérateur dudit moteur à combustion interne (11a) ;
- lesdits seconds moyens d'actionnement comprennent un actionneur hydraulique à simple effet (27) dans lequel le rappel est actionné par un ressort hélicoïdal (28), la tige dudit actionneur étant reliée cinématiquement à l'accélérateur dudit moteur à combustion interne (11a) ;
- lesdits seconds moyens d'actionnement (27 -28) sont reliés à la sortie desdits premiers moyens d'actionnement (23) par l'interposition de valves (24, 25),
**caractérisée en ce que** :
- ladite tige dudit actionneur est reliée cinématiquement à une manivelle à pédale (19) de l'accélérateur dudit moteur à combustion interne (11a), et
- ledit actionneur hydraulique à simple effet (27) desdits seconds moyens d'actionnement (27 - 28) est relié à la sortie desdits premiers moyens d'actionnement (23) par l'interposition d'une première valve bistable (24) et d'une seconde valve à cartouche normalement fermée à deux voies (25), ladite seconde valve (25) est ouverte par un solénoïde (26).

2. Transmission selon la revendication 1,
**caractérisée en ce que** ladite unité de distribution (17) est constituée par deux distributeurs de dérivation (20) qui sont associés à un nombre égal de conduits (21) reliés auxdits premiers moyens d'actionnement (23) et, au niveau de la sortie, à un réservoir (22), lesdits deux distributeurs de dérivation (20) pouvant être actionnés alternativement sous la commande de ladite pédale de commande (18).

3. Transmission selon la revendication 1,
**caractérisée en ce que** lesdits premiers moyens d'actionnement comprennent deux vérins ayant un piston à simple effet avec ressort de rappel (23).

4. Transmission selon la revendication 1,
**caractérisée en ce que** lesdits moyens de commande comprennent des moyens de commande de surpression constitués par au moins une dérivation (30) ayant une valve de limitation de pression (31), qui est reliée à un réservoir correspondant (32) au niveau de sa sortie et à ladite seconde pompe (15) au niveau de son alimentation.

5. Transmission selon la revendication 4,
**caractérisée en ce que** lesdits moyens de commande de surpression comprennent au moins une dérivation (33) ayant deux valves de retenue (34), dont chacune est couplée à une valve de limitation de pression (35) correspondante, chaque valve de retenue (34), ainsi que la valve de limitation de pression correspondante (35), étant reliée à un réservoir correspondant au niveau de sa sortie et, au niveau de son alimentation, à une dérivation pour relier ladite première pompe (12) audit moteur hydraulique (14).
